# EUROPÄISCHE PATENTSCHRIFT

(11) **EP 1 384 383 B1**
(45) Veröffentlichungstag und Bekanntmachung des Hinweises auf die Patenterteilung: **15.09.2004**
(21) Anmeldenummer: 01943354.9
(22) Anmeldetag: 14.05.2001
(51) Int. Cl.: H04Q 3/00

(54) **VERFAHREN ZUR STEUERUNG EINER VERBINDUNG IN EINEM TELEKOMMUNIKATIONSNETZ**
METHOD FOR CONTROLLING A LINK IN A TELECOMMUNICATION NETWORK
PROCEDE DE REGULATION D'UNE LIAISON DANS UN RESEAU DE TELECOMMUNICATION

(30) Priorität: 30.04.2001 AT 6952001
(43) Veröffentlichungstag der Anmeldung: 28.01.2004
(73) Patentinhaber: SIEMENS AKTIENGESELLSCHAFT, 80333 München (DE)
(72) Erfinder: KINDERMANN, Robert, A-1210 Wien (AT); KNÖBL, Karl, A-1210 Wien (AT)
(74) Vertreter: Berg, Peter, Dipl.-Ing.
(86) Internationale Anmeldenummer: PCT/EP2001/005455
(87) Internationale Veröffentlichungsnummer: WO 2002/089500

(56) Entgegenhaltungen:
- EP-A- 1 006 748
- US-A- 5 737 406

## Beschreibung

Die Erfindung betrifft ein Verfahren zur Steuerung einer Verbindung in einem Telekommunikationsnetz, insbesondere einer Verbindung zwischen zumindest einem ersten und einem zweiten Telekommunikationsendgerät. Weiterhin betrifft die Erfindung eine Anordnung zur Durchführung des erfindungsgemäßen Verfahrens.

Der Aufbau von Telekommunikationsnetzen und die Prinzipien, denen ein solches Telekommunikationsnetz folgt, führen in der Regel dazu, dass Informationen über den Zustand einer Verbindung, welche unter anderem für die Steuerung einer solchen Verbindung nötig sind, im Telekommunikationsnetz verteilt vorliegen.

In klassischen Telekommunikationsnetzen beispielsweise, die nach dem "Time Division Multiplex Verfahren", kurz TDM-Verfahren arbeiten, wird eine hierarchisch aufgebaute Zieladresse ausgewertet, um die gewünschte Verbindung herzustellen. Dabei werden ausgehend von Landes- und Ortsvorwahlziffern die entsprechenden Verbindungen zwischen den einzelnen Vermittlungsknoten eines Telekommunikationsnetzes geschaltet, wobei in einem Vermittlungsknoten in der Regel nur ein Teil der Rufnummer verarbeitet wird. Insbesondere wird teilweise nur der unbearbeitete Teil der Rufnummer an den nächsten Vermittlungsknoten weitergeleitet. Das Schalten einer Verbindung folgt also einem hierarchischen Prinzip.

Ein Vermittlungsknoten agiert bei diesem Telekommunikationsnetz im wesentlichen autonom. Vom Vermittlungsknoten können also auch Maßnahmen gesetzt werden, über welche gegebenenfalls benachbarte Vermittlungsknoten, aber nicht die Endpunkte informiert werden. Dies führt dazu, dass Informationen über den Zustand einer Verbindung im Telekommunikationsnetz verteilt vorliegen. Eine gesamtheitliche Betrachtungsweise der Verbindung ist daher in der Regel nicht oder nur schwer möglich.

An den Endpunkten der Verbindung liegt aus den angeführten Gründen keine umfassende Information über den Zustand der Verbindung vor, insbesondere keine Information über einen anderen Endpunkt der Verbindung. Auch ist es meist nicht möglich Vermittlungsknoten, welche nicht unmittelbar an den Endpunkt angrenzen, durch einen am Endpunkt eingegebenen Befehl unmittelbar zu beeinflussen. Ein derartiges Telekommunikationsnetz folgt also weiterhin dem Prinzip, dass nicht jedes beliebige Teilstück der Verbindung vom Endpunkt aus unmittelbar beeinflusst werden kann, sondern nur mittelbar.

Für viele Aufgaben, unter anderem das Steuern einer Verbindung, ist es aber beispielsweise nötig, Informationen über den Zustand dieser Verbindung an einem beliebigen Punkt zu erhalten oder aber auch Teilstücke der Verbindung vom diesem Punkt aus zu beeinflussen und damit die Verbindung zu steuern. Insbesondere den Endpunkten kommt in diesem Zusammenhang eine bedeutsame Rolle zu.

Unter Verbindungen sind in diesem Zusammenhang nicht nur Verbindungen zwischen zwei Punkten in einem Telekommunikationsnetz zu verstehen, sondern auch Verbindungen zwischen mehreren Endpunkten. Ein wesentlicher Aspekt ist hierbei auch der Fall, dass eine Verbindung in eine andere übergeführt wird. Ein Beispiel wäre das Umschalten einer Verbindung zwischen zwei Telekommunikationsendgeräten in eine Konferenzschaltung mit drei oder mehr Teilnehmern und umgekehrt. Ein weiterer Fall ist auch die unter dem Begriff "Makeln" oder "Anklopfen" bekannte Funktion, bei der von einem ersten Telekommunikationsendgerät wahlweise eine Verbindung zu einem zweiten oder dritten Telekommunikationsendgerät hergestellt werden kann. Der nicht mit dem ersten Telekommunikationsendgerät verbundene Teilnehmer befindet sich dabei in einer Warteposition. Ein drittes Beispiel ist eine sogenannte "Sekräterinnen-Funktion", bei der zu Beginn eine Verbindung zwischen einem ersten und einem zweiten Telekommunikationsendgerät, sowie zwischen dem ersten und einem dritten Telekommunikationsendgerät "esteht. In Folge werden die beiden bestehenden Verbindungen in eine Verbindung zwischen zweitem und drittem Telekommunikationsendgerät übergeführt.

Weiterhin treten beim Zusammenschalten von technologisch unterschiedlichen Telekommunikationsnetzen Probleme auf, beispielsweise wenn eine Verbindung in einem ersten Telekommunikationsnetz durch die Beeinflussung von Teilstücken, aus denen die Verbindung aufgebaut wird, gesteuert werden kann, bei einem zweiten Telekommunikationsnetz dagegen die Verbindung als Ganzes betrachtet und im wesentlichen von den Endpunkten aus gesteuert wird. Ein Beispiel für das erste Telekommunikationsnetz ist ein Telekommunikationsnetz, welches nach dem TDM-Verfahren arbeitet, also aus der klassischen Vermittlung von Telefongesprächen abgeleitet wurde. Für ein solches Netz ist der Begriff "verbindungsorientiertes Telekommunikationsnetz" bekannt. Ein Beispiel für das zweite Telekommunikationsnetz wäre dagegen ein nach dem "Internet Protocol" arbeitendes Telekommunikationsnetz, ein also aus der klassischen Datenübertragung abgeleitetes Netz. Für ein solches Datennetz ist auch der Begriff "paketvermittelndes Telekommunikationsnetz" gebräuchlich. In diesem Zusammenhang ist auch das "Real Time Transport Protocol", kurz RTP-Protokoll erwähnenswert.

Da Sprache auch als Datenstrom betrachtet werden kann, werden sowohl Daten über TDM-Netze, als auch Sprache über IP-Netze transportiert. Dies ist ein Grund, weswegen technologisch unterschiedliche Telekommunikationsnetze gegeneinander ausgetauscht oder zusammengeschaltet werden. Dieses Verschmelzen verschiedenartiger Telekommunikationsnetze ist auch unter dem Begriff "Konvergenz" bekannt.

Telekommunikationsnetze, welche im wesentlichen aus TDM-Komponenten aufgebaut sind und mit IP-Netzen zusammengeschlossen werden, arbeiten beispielsweise nach dem Standard für "Bearer Independent Call Control" und werden kurz BICC-Netze genannt.

Die unterschiedlichen Prinzipien, denen die einzelnen Telekommunikationsnetze folgen, führen zu Problemen bei deren Zusammenschalten. Dies ist ein Grund, weswegen spezielle Funktionen für das technologieübergreifende Zusammenarbeiten der Netze erforderlich sind. Diese Funktionen werden auch "Interworking Functions" genannt.

Bei bekannten Netzmodellen für Sprachdatendienste in Paketdatennetzen, wie sie zum Beispiel in den ITU-Dokumenten Q 1901 und Q 1902 beschrieben werden, ist am Übergang zwischen verschiedenen Netzwerken jeweils eine Interworkingfunktion vorgesehen, mittels derer die Nutzkanäle zwischen den Netzwerken vermittelt werden. Diese Interworkingfunktion ist bei jedem Netzübergang vorgesehen, auch wenn die beiden Netzwerke technologisch gleichartig sind und eine Interworkingfunktion aus technischen Gründen nicht notwendig wäre oder wenn ein Nutzkanal über mehrere Netze hinweg geführt wird. Diese Interworkingfunktionen führen meist zu Verzögerungen bei der Datenumsetzungen, in manchen Fällen auch zu Datenverlusten. Um diese negativen Effekte zu vermeiden oder weitgehend einzudämmen, sind erhebliche technische Aufwendungen für die Realisierung einer solchen Interworkingfunktion nötig.

Das Dokument US 5,737,406 beschreibt ein Modell, das zur Steuerung einer Verbindung in einem Telekommunikationsnetz benutzt wird. Der Erfindung liegt also die Aufgabe zugrunde, ein Verfahren zur Steuerung einer Verbindung in einem Telekommunikationsnetz, insbesondere zwischen zumindest einem ersten und einem zweiten Telekommunikationsendgerät, anzugeben, bei dem das Steuern auf einfache Weise erfolgt.

Dies geschieht mit einem Verfahren der eingangs genannten Art,
- bei dem in einem programmierbaren Rechner ein Modell dieser Verbindung erzeugt wird,
- bei dem dieses Modell in einen dem Zustand dieser Verbindung zugeordneten Initialzustand gesetzt wird,
- bei dem beim Durchführen von ersten Maßnahmen, welche im Telekommunikationsnetz betreffend diese Verbindung gesetzt werden, zugeordnete Zustandswechsel im Modell ausgelöst werden,
- bei dem zweite Maßnahmen im Modell gesetzt werden und
- bei dem mit Hilfe des Verhaltens des Modells aufgrund einer zweiten Maßnahme entschieden wird, ob diese zweite, eine andere oder keine Maßnahme im Telekommunikationsnetz gesetzt wird.

Beim erfindungsgemäßen Verfahren liegen die Informationen, welche den Zustand einer Verbindung zwischen zwei Telekommunikationsendgeräten betreffen, unmittelbar auch in einem Verbindungsmodell vor. Auf diese Weise ist es zum Beispiel möglich, eine Maßnahme, die im Telekommunikationsnetz gesetzt werden soll, vorab im Verbindungsmodell zu setzen und aus dem Verhalten des Verbindungsmodells eine weitere Vorgangsweise abzuleiten. Eine im Verbindungsmodell gesetzte Maßnahme kann dabei auch den Zustand des Modells verändern. Die Verbindung im Telekommunikationsnetz wird dadurch dagegen nicht beeinflusst. Zeigt das Verhalten des Verbindungsmodells, dass sich eine gesetzte Maßnahme negativ auf die Verbindung auswirken würde, wird diese beispielsweise im Verbindungsmodell wieder zurückgenommen und im Telekommunikationsnetz überhaupt nicht gesetzt.

In diesem Zusammenhang wird auch darauf hingewiesen, dass die Unterscheidung in erste und zweite Maßnahmen im Rahmen der Offenbarung nicht zur Angabe einer sequentiellen Abfolge, sondern zur Klassifizierung von Maßnahmen dient.

Denkbar ist auch, dass das Modell nicht zum Testen einer zu setzenden Maßnahme eingesetzt wird, sondern dazu dient, aus einer Maßnahme, die im Verbindungsmodell gesetzt wird, allgemein eine weitere Vorgangsweise abzuleiten. Diese weitere Vorgangsweise muss nicht zwingend auch Maßnahmen im Telekommunikationsnetz zur Folge haben. Vorteilhaft dabei ist, dass die Verbindung im Telekommunikationsnetz davon unbeeinflusst bleibt.

Ein weiterer Vorteil besteht darin, dass das Verhalten des Verbindungsmodells vergleichsweise rasch ausgewertet werden kann, da hierzu die eine Verbindung betreffenden Informationen, welche in verschiedenen Modulen und Speicherbereichen vorliegen, nicht unmittelbar ausgewertet müssen. Diese Informationen liegen ja bereits im Verbindungsmodell vor. Diese Vorgangsweise ist insbesondere auch dann vorteilhaft, wenn diese Informationen nur verteilt im Telekommunikationsnetz vorliegen. Eine unmittelbare Auswertung wäre dabei mit hohem Datenverkehr zwischen den einzelnen im Telekommunikationsnetz verteilten Modulen verbunden, der so vorteilhaft vermieden werden kann.

Die Steuerung einer Verbindung kann beim erfindungsgemäßen Verfahren weiterhin Maßnahmen umfassen, bei denen entweder ein Nutzkanal der Verbindung, ein Signalisierungskanal der Verbindung oder beide beeinflusst werden. Die Maßnahmen und die Netzelemente, auf die sie sich beziehen, hängen in hohem Maße von den Prinzipien, nach denen ein Telekommunikationsnetz arbeitet, und von der verwendeten Technologie ab. Der Bezug auf Nutz- und Signalisierungskanal ist daher nicht zwingend.

Die Aufgabe der Erfindung wird auch mit einer Variante des erfindungsgemäßen Verfahrens gelöst,
- wobei im ersten Telekommunikationsnetz ein erster Satz von Maßnahmen zur Erlangung eines bestimmten Zustands der Verbindung, bezogen auf die beiden Endpunkte, gesetzt werden muss und
- wobei in einem zweiten Telekommunikationsnetz ein zweiter Satz von Maßnahmen zur Erlangung des selben Zustands der Verbindung, bezogen auf die beiden Endpunkte, gesetzt werden muss,
- bei dem in einem programmierbaren Rechner ein Modell dieser Verbindung des zweiten Telekommunikationsnetzes erzeugt wird,
- bei dem dieses Modell in einen dem Zustand dieser Verbindung zugeordneten Initialzustand gesetzt wird,
- bei dem beim Durchführen von ersten Maßnahmen, welche im ersten oder zweiten Telekommunikationsnetz betreffend diese Verbindung gesetzt werden, zugeordnete Zustandswechsel im Modell ausgelöst werden,
- bei dem zweite Maßnahmen des ersten oder zweiten Telekommunikationsnetzes im Modell gesetzt werden und
- bei dem mit Hilfe des Verhaltens des Modells aufgrund einer zweiten Maßnahme eine Maßnahme im ersten und/oder Telekommunikationsnetz abgeleitet und gegebenenfalls gesetzt wird.

Verschiedene Telekommunikationsnetze arbeiten nicht zwingend nach den gleichen Prinzipien, sodass beispielsweise das Durchschalten einer Verbindung verschiedene Maßnahmen in den einzelnen Telekommunikationsnetzen erfordern, wenngleich auch das Ergebnis bezogen auf die Endpunkte im wesentlichen das gleiche ist. Im angeführten Beispiel ist für die Nutzer eines Telekommunikationsendgerätes daher in der Regel nicht erkennbar, welche internen Zustände und Schaltmaßnahmen zu der Durchschaltung der Verbindung geführt haben und auf welche Art und Weise das Telekommunikationsnetz, an das die Telekommunikationsendgeräte angeschlossen sind, arbeitet.

Durch das Zusammenschalten verschiedener Telekommunikationsnetze beispielsweise sind besondere Vorkehrungen nötig, um das Verhalten bezogen auf die Endpunkte einer Verbindung unverändert zu belassen, obwohl in den verschieden Telekommunikationsnetzen dazu unterschiedliche Maßnahmen notwendig sind.

Die Erfindung löst dieses Problem in besonders vorteilhafter Weise, da hier eine zweite Maßnahme eines ersten oder zweiten Telekommunikationsnetzes im Verbindungsmodell gesetzt wird und mit Hilfe des Verhaltens des Verbindungsmodells aufgrund dieser Maßnahme entschieden wird, ob eine zweite Maßnahme im ersten und/oder zweiten Telekommunikationsnetz gesetzt wird.

Günstig ist es,
- wenn die zweite Maßnahme, welche im Verbindungsmodell gesetzt wird, auf ein Teilstück der Verbindung bezogen ist und
- wenn aus dem Verhalten des Verbindungsmodells aufgrund dieser Maßnahme eine Maßnahme im Telekommunikationsnetz gesetzt wird, welche auf einen oder beide Endpunkte der Verbindung bezogen ist.

Auf diese Weise ist es möglich, eine bei der Gestaltung von TDM-Netzen verbreitete Sichtweise, welche auf Teilstücke einer Verbindung in einem Telekommunikationsnetz bezogen ist, auf eine Betrachtungsweise abzubilden, bei der das Hauptaugenmerk auf die gesamte Verbindung und deren Endpunkte gelegt wird.

Günstig ist es weiterhin,
- wenn die zweite Maßnahme, welche im Verbindungsmodell gesetzt wird, auf einen oder beide Endpunkte der Verbindung bezogen ist und
- wenn aus dem Verhalten des Verbindungsmodells aufgrund dieser Maßnahme eine Maßnahme im Telekommunikationsnetz gesetzt wird, welche auf ein Teilstück der Verbindung bezogen ist.

Mit dieser Variante werden Maßnahmen, welche auf einen Endpunkt der Verbindung bezogen sind, auf Maßnahmen abgebildet, die ein Teilstück der Verbindung beeinflussen. Hier wird beispielsweise das Verhalten eines typischen paketvermittelnden Datennetzes, welches maßgeblich an den Endpunkten einer Verbindung beeinflusst werden kann, zum Beispiel auf die Prinzipien eines klassischen TDM-Netzes abgebildet, bei dem die Verbindung zwischen zwei Telekommunikationsendgeräten vor allem durch die Beeinflussung von Teilstücken der Verbindung gesteuert werden kann.

Eine besonders vorteilhafte Variante des erfindungsgemäßen ist bei einer Ausgestaltung gegeben,
- bei der das Verbindungsmodell durch Objekte und deren Verbindungen gebildet wird,
- bei der beim Durchführen von ersten Maßnahmen zugeordnete Objekte in einem programmierbaren Rechner erzeugt oder gelöscht werden und/oder
- bei der beim Durchführen von ersten Maßnahmen mehrere zugeordnete Objekte verbunden oder voneinander getrennt werden und/oder
- bei der beim Durchführen von ersten Maßnahmen zugeordnete, im Modell verwendete Parameter geändert werden.

Gleichzeitig mit dem Erzeugen des Objektes werden in der Regel auch die in diesem Objekt verwendeten Parameter initialisiert. Das gleiche gilt selbstverständlich auch für das Verbinden mehrerer Objekte, sofern dieser Verbindung Parameter zugeordnet sind. Durch das Initialisieren und das Durchführen von Änderungen sowohl im Telekommunikationsnetz, als auch im Verbindungsmodell, wird gewährleistet, das die Struktur des Verbindungsmodells und die Werte der darin verwendeten Parameter den Zustand einer Verbindung in einem Telekommunikationsnetz widerspiegeln. Selbstverständlich können Objekte und deren Verbindungen auch wieder gelöscht werden, wenn dies vorgesehen ist und die zugeordnete Maßnahme im Telekommunikationsnetz gesetzt wird.

Der objektorientierte Lösungsansatz ist besonders vorteilhaft, da der Überblick über das erhaltene Modell vergleichsweise einfach gewahrt werden kann. Des weiteren sind auch Erweiterungen und Änderungen relativ komfortabel durchzuführen.

Vorteilhaft ist es auch, wenn als Verbindungsmodell eine Zustands-/Anreiztabelle in einem programmierbaren Rechner erzeugt wird. Neben dem objektorientierten Ansatz ist es auch denkbar, die in einem Verbindungsmodell auftretenden Zustände und Transaktionen in Form einer Zustands-/Anreiz-Matrix darzustellen. Vorteilhaft ist die vergleichsweise schnelle Auswertung einer Transaktion.

Eine vorteilhafte Variante ist weiterhin gegeben,
- wenn als Objekt ein Modell eines Sendekanals vorgesehen wird und/oder
- wenn als Objekt ein Modell eines Empfangskanals vorgesehen wird und/oder
- wenn als Objekt ein Modell eines Schaltelementes zum Verbinden und Trennen eines Empfangskanals mit einem Sendekanal und umgekehrt vorgesehen wird und/oder
- wenn als Objekt ein Modell eines Signalgenerators vorgesehen wird und ein Sendekanal dieses Objekt mit einem Empfangskanal eines anderen Objekts verbunden wird und/oder
- wenn als Objekt ein Modell eines Signalempfängers vorgesehen wird und ein Empfangskanal dieses Objekts mit dem Sendekanal eines anderen Objekts verbunden wird und/oder
- wenn als Objekt ein Modell einer kombinierten Signalquelle/senke vorgesehen wird und ein Sendekanal dieser kombinierten Signalquelle/senke mit einem Empfangskanal eines anderen Objekts und/oder ein Empfangskanal dieser kombinierten Signalquelle/senke mit einem Sendekanal eines anderen Objekts verbunden wird und/oder
- wenn als Objekt ein Konvertierungselement zum Umwandeln der Adresse eines Telekommunikationsendgerätes von einem Adressformat in ein anderes Adressformat vorgesehen wird.

Sende- und Empfangskanäle, beziehungsweise auch kombinierte Sende/Empfangskanäle, sind typische Bestandteile in einem Telekommunikationsnetz. Das gleiche gilt auch für Signalgeneratoren und Signalempfänger.

Ein Beispiel für einen Signalgenerator ist beispielsweise ein Tongenerator, der für das Abgeben von Ruftönen geeignet ist. Aber auch jede andere Signalquelle ist von der Erfindung umfasst, zum Beispiel also auch eine automatische Ansage in einer Vermittlungsstelle.

Unter Signalempfängern sind beispielsweise Tonempfänger zu verstehen, die in der Lage sind ein Signal nach dem "Dual Tone Multi Frequency Standard", kurz DTMF-Standard, auszuwerten. Analog zum Signalgenerator sind von der Erfindung aber nicht nur Einrichtungen zur Verarbeitung von Tönen umfasst, sondern zum Beispiel auch Sprachverarbeitungssysteme.

Ein typisches Beispiel für eine kombinierte Signalquelle/senke ist ein Telekommunikationsendgerät, welches in der Regel sowohl ein Mikrofon, als auch einen Lautsprecher umfasst.

Typisch für ein Telekommunikationsnetz sind auch Schaltelemente, die in der Lage sind, die einzelnen Einheiten zu verbinden und wieder zu trennen. Beispielsweise kann so der Sendekanal eines Tongenerators mit dem Empfangskanal eines Telekommunikationsendgerätes verbunden werden um so eine freie oder besetzte Leitung zu signalisieren. Nach dem Durchschalten der Verbindung wird dann der Empfangskanal des Telekommunikationsendgerätes vom Tongenerator auf den Sendekanal des verbundenen Telekommunikationsendgerätes umgeschaltet.

Denkbar ist auch die Anwendung eines Konvertierungselements, welches die Adresse eines Telekommunikationsendgerätes von einem Adressformat in ein anderes Adressformat umwandelt. Dies ist insbesondere dann notwendig, wenn in einem Telekommunikationsnetz verschiedene Adressformate verwendet werden, beziehungsweise verschiedene Telekommunikationsnetze zusammengeschaltet werden, in denen unterschiedliche Adressformate zur Anwendung kommen.

Eine besonders vorteilhafte Variante wird mit einer Ausgestaltung realisiert,
- bei der als Telekommunikationsnetz ein Bearer Independent Call Control Netz vorgesehen ist,
- bei der eine Funktionalität einer Gateway Serving Node, insbesondere der eine Gateway Bearer Interworking Funktion betreffende Anteil, in das Modell integriert wird und/oder
- bei der eine Funktionalität einer Interface Serving Node in das Modell integriert wird und/oder
- bei der eine Bearer Interworking Function in das Modell integriert wird und/oder
- bei der eine Gateway Bearer Interworking Funktion in das Modell integriert wird.

Eine für den Betrieb von klassischen TDM-Netzen verbreitete Sichtweise, bei der eine Verbindung in einem Telekommunikationsnetz maßgeblich durch die Beeinflussung von Teilstücken dieser Verbindung gesteuert wird, hat unter anderem beispielsweise bei der Standardisierung von Bearer Independent Call Control Netzen zu einer Spezifikation einer Vielzahl von verschiedenen Netzelementen geführt. Das erfindungsgemäße Verfahren bietet eine einfache Möglichkeit diese Elemente in einem Modell zu integrieren und somit deren Funktionalität auf einen oder mehrere Punkte im Telekommunikationsnetz zu fokussieren.

Die Aufgabe der Erfindung wird weiterhin mit einem Verfahren der eingangs genannten Art gelöst, wobei das Telekommunikationsnetz aus technologisch unterschiedlichen Teilnetzen aufgebaut ist und für ein Teilnetz insbesondere ein Bearer Independent Call Control Netz vorgesehen ist und
- bei dem eine Funktionalität einer Gateway Serving Node, insbesondere der durch eine Gateway Bearer Interworking Function begründete Anteil, in eine Funktionalität einer Interface Service Node integriert wird.

Die beispielsweise in einem "Bearer Independent Call Control"-Netz, kurz BICC-Netz, verteilten Gateway Service Nodes werden, insbesondere hinsichtlich der Gateway Bearer Interworking Functions, in die Interface Service Nodes, also in die Endpunkte der Verbindung, verlagert. Damit werden Ressourcen, welche bei einer Anordnung nach dem Stand der Technik nötig wären, eingespart. Auf diese Weise können beispielsweise sowohl eine höhere Ausfallsicherheit für eine Verbindung, als auch bessere Durchlaufzeiten der Daten durch das Telekommunikationsnetz realisiert werden.

Vorteilhaft ist es dabei,
- wenn die Nutzkanalvermittlung über eine erste Bearer Interworking Function und/oder eine zweite Bearer Interworking Function geführt wird.

Bei dieser Ausgestaltung der Erfindung werden weitere Gateway Bearer Interworking Functions nicht zwingend benötigt und es erfolgt daher keine oftmalige Datenumsetzung, so wie das beim Stand der Technik der Fall ist. Gegebenenfalls kann noch eine weiter Bearer Interworking Function eingespart werden, sofern das entsprechende Telekommunikationsendgerät direkt, also ohne Interworking Funktion, an das Telekommunikationsnetz angeschlossen werden kann. Eine Reduktion der Datenumsetzung hat ebenfalls unter anderem bessere Datendurchlaufzeiten und höhere Ausfallsicherheit der Verbindung zur Folge.

Eine besonders vorteilhafte Variante der Erfindung ist auch mit einem Verfahren gegeben,
- bei dem eine Funktionalität einer Gateway Serving Node, insbesondere der eine Gateway Bearer Interworking Function betreffende Anteil, und/oder
- bei dem eine Funktionalität einer Interface Serving Node und/oder
- bei dem eine Bearer Interworking Function und/oder
- bei dem eine Gateway Bearer Interworking Function in einem Modell einer Verbindung im Telekommunikationsnetz abgebildet wird.

Eine Vielzahl von verschiedenen Netzelementen kann auf diese Weise in ein Modell einer Verbindung integriert und gegebenenfalls eingespart werden. Deren Funktionalität wird damit auf einen oder mehrere Punkte im Telekommunikationsnetz fokussiert. Auch hier können beispielsweise hohe Ausfallsicherheit für eine Verbindung, als auch bessere Durchlaufzeiten der Daten durch das Telekommunikationsnetz realisiert werden.

Auch für dieses Verbindungsmodell gelten die bereits erwähnten möglichen Ausführungsformen und deren Vorteile. Dabei kann das Verbindungsmodell sowohl durch Objekte und deren Verbindungen, als auch durch eine Zustands-/Anreiztabelle gebildet werden.

Die Aufgabe der Erfindung wird auch durch eine Anordnung gelöst, welche zur Durchführung des erfindungsgemäßen Verfahrens vorbereitet ist,
- bei der die Anordnung einen programmierbaren Rechner umfasst, welcher zur Speicherung und Verwaltung eines Modells einer Verbindung in einem Telekommunikationsnetz geeignet ist,
- bei der Mittel zur Auslösung von Zustandswechsel im Modell vorhanden sind, wobei die Zustandswechsel ersten Maßnahmen, welche im Telekommunikationsnetz gesetzt werden, zugeordnet sind,
- bei der Mittel zum Setzen von zweiten Maßnahmen im Modell vorhanden sind,
- bei der die Anordnung Mittel zur Auswertung des Verhaltens des Modells aufgrund einer zweiten Maßnahme und Mittel zur Entscheidung ob diese zweite, eine andere oder keine Maßnahme im Telekommunikationsnetz gesetzt wird, umfasst und
- bei der Mittel zum Setzen einer Maßnahme im Telekommunikationsnetz, ausgehend vom Modell, vorhanden sind.

Günstig ist dabei, dass die Anordnung teilweise bekannte und erprobte Komponenten umfasst. Im übrigen gelten die beim erfindungsgemäßen Verfahren genannten Vorteile gleichermaßen auch für die erfindungsgemäße Anordnung.

Die Aufgabe der Erfindung wird schließlich auch mit einer Anordnung gelöst, welche zur Durchführung des erfindungsgemäßen Verfahrens vorbereitet ist, und
- bei der zwischen einer ersten Interface Serving Node und einer zweiten Interface Serving Node eine durchgehende logische Verbindung besteht,
- bei der die erste Interface Serving Node mit ersten Bearer Interworking Functions verbunden ist und/oder
- bei der die zweite Interface Serving Node mit zweiten Bearer Interworking Functions verbunden ist.

Im Gegensatz zu einer Lösung nach dem Stand der Technik besteht bei dieser Variante zwischen den Interface Serving Nodes eine durchgehende logische Verbindung. Die den Gateway Serving Nodes zugeordneten Gateway Bearer Interworking Functions werden hier in der Regel nicht mehr benötigt, da deren Funktionalität in die Interface Serving Nodes integriert wird. Gegebenenfalls kann eine Gateway Serving Node daher überhaupt entfallen. Es resultiert also eine Netzkonfiguration mit weniger Netzelementen und technisch einfacherem Aufbau.

Die Erfindung wird anhand eines in den Figuren dargestellten Ausführungsbeispiels näher erläutert, welches eine beispielhaftes Verbindungsmodell betrifft, das aus mehreren miteinander verbundenen Objekten besteht. Weiterhin werden die Vorteil der Erfindung anhand einer Netzkonfiguration eines BICC-Netzes dargestellt.

Es zeigen:
- Figur 1:: Ein beispielhaftes Verbindungsmodell in einem Initialzustand;
- Figur 2:: Ein beispielhaftes Verbindungsmodell beim Anlegen eines Freizeichens an ein Telekommunikationsendgerät;
- Figur 3:: Ein beispielhaftes Verbindungsmodell beim Übermitteln der ersten Rufziffer eines Telekommunikationsendgerätes;
- Figur 4:: beispielhafte Anordnung zur Übermittlung von Daten zwischen Verbindungsmodellen, welche im Telekommunikationsnetz verteilt sind;
- Figur 5:: Ein beispielhaftes Verbindungsmodell beim Anlegen eines Ruftons an ein Telekommunikationsendgerät;
- Figur 6:: Eine beispielhafte Anordnung zur Verbindung von zwei Telekommunikationsendgeräten über verschiedenartige Telekommunikationsnetze;
- Figur 7:: Eine Netzwerkkonfiguration nach dem Stand der Technik, bei der eine Verbindung zwischen zwei Telekommunikationsendgeräten über mehrere technologisch unterschiedliche Telekommunikationsnetze hinweg hergestellt wird;
- Figur 8:: Eine erfindungsgemäße Netzwerkkonfiguration, bei der eine Verbindung zwischen zwei Telekommunikationsendgeräten über mehrere technologisch unterschiedliche Telekommunikationsnetze hinweg hergestellt wird;

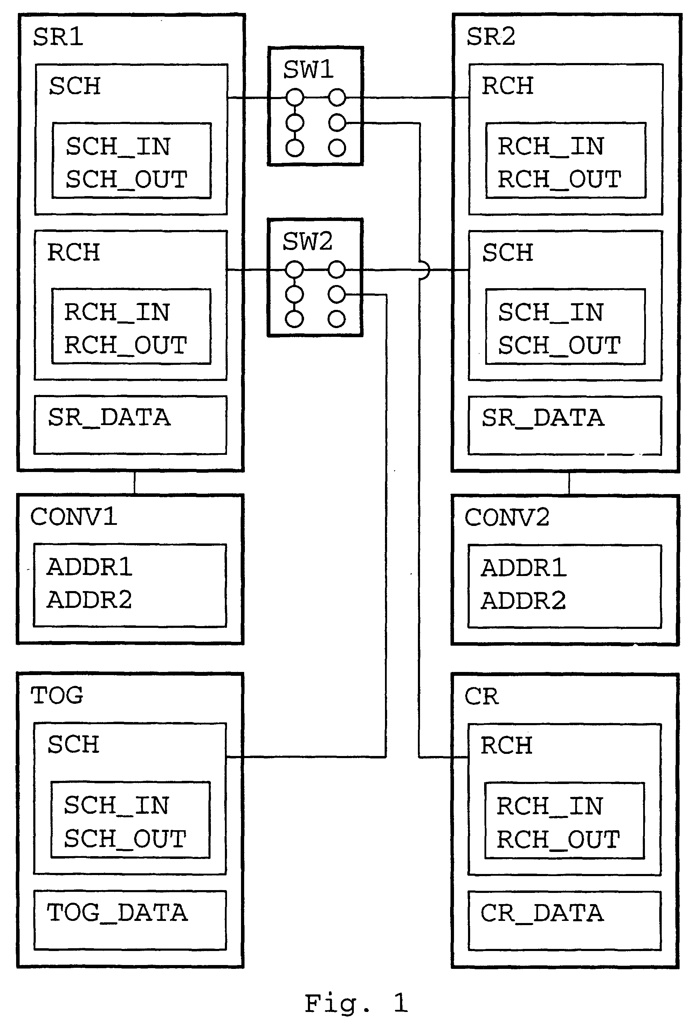

Figur 1 zeigt ein beispielhaftes Verbindungsmodell in einem Initialzustand, welches eine erste kombinierte Signalquelle/senke SR1, eine zweite kombinierte Signalquelle/senke SR2, ein erstes Schaltelement SW1, ein zweites Schaltelement SW2, ein erstes Konvertierungselement CONV1, ein zweites Konvertierungselement CONV2, einen Tongenerator TOG und einen Signalempfänger CR umfasst.

Sowohl die erste kombinierte Signalquelle/senke SR1, als auch die zweite kombinierte Signalquelle/senke SR2 stellen im gezeigten Beispiel die Endpunkte einer Verbindung in einem Telekommunikationsnetz dar und zeichnen sich durch einen gleichartigen Aufbau aus. Sie bestehen aus jeweils einem Sendekanal SCH, einem Empfangskanal RCH und einem zusätzlichen Datenbereich SR_DATA.

Der Tongenerator TOG umfasst einen Sendekanal SCH und einen zusätzlichen Datenbereich TOG_DATA. Analog dazu umfasst der Signalempfänger CR einen Empfangskanal RCH und ebenfalls einen zusätzlichen Datenbereich CR_DATA.

Alle Sendekanäle SCH in den dargestellten Objekten bestehen aus je einem Eingangsregister SCH_IN und einem Ausgangsregister SCH_OUT. Analog dazu umfassen alle Empfangskanäle RCH jeweils ein Eingangsregister RCH_IN und ein Ausgangsregister RCH_OUT.

Für das Eingangsregister des Sendekanals SCH_IN sind in diesem Beispiel die Werte Sendebereitschaft SReady, Toninformation Tone und Ruhezustand Idle möglich. Für das Eingangsregister des Empfangskanals RCH_IN sind die Werte Empfangsbereitschaft Rready und Ruhezustand Idle möglich. Für das Ausgangsregister des Sendekanals SCH_OUT sind ebenfalls die Werte Empfangsbereitschaft Rready und Ruhezustand Idle beim Ausgangsregister des Empfangskanals RCH_OUT die Werte Sendebereitschaft SReady, Toninformation Tone und Ruhezustand Idle in diesem Beispiel vorgesehen.

Änderungen der Werte der Ausgangsregister werden im Beispiel erkannt und für die Auswertung des Verhaltens des Verbindungsmodells herangezogen. Daraus werden gegebenenfalls weitere Maßnahmen abgeleitet, welche in einem Telekommunikationsnetz gesetzt werden. Dabei kann, beispielsweise objektbezogen, eine Tabelle angelegt werden, in der einer Änderung eines Ausgangsregisters eine im Telekommunikationsnetz zu setzende Maßnahme zugeordnet ist. Ist keine Zuordnung vorhanden, wird keine Maßnahme gesetzt. Denkbar sind auch mehrfache Zuordnungen, sowie Zuordnungen, die sich auf verschiedene Telekommunikationsnetze beziehen.

Sowohl das erste Konvertierungselement CONV1, als auch das zweite Konvertierungselement CONV2 bestehen im gezeigten Beispiel aus einem ersten Adressfeld ADDR1 und einem zweiten Adressfeld ADDR2. Denkbar sind aber auch mehrere Adressfelder, beziehungsweise auch zusätzliche Datenfelder.

Das erste Schaltelement SW1 und das zweite Schaltelement SW2 sind gleichartig aufgebaut und bestehen aus drei Anschlüssen, wobei der erste Anschluss entweder mit dem zweiten oder mit dem dritten Anschluss verbunden werden kann. Zusätzlich ist noch ein Schaltzustand möglich, bei dem kein Anschluss mit einem anderen verbunden ist. Im gezeigten Beispiel wurde weiterhin keine Rücksicht darauf genommen, ob es sich bei den Anschlüssen um Eingangs- oder Ausgangsklemmen handelt. Denkbar sind natürlich auch Bauformen, die von der in der Figur dargestellten abweichen. Auch im Hinblick auf fehlende Datenfelder ist die Darstellung der Schaltelemente lediglich symbolhaft zu sehen. Schaltelemente können auch überhaupt gestrichen und durch flexible direkte Verbindungen zwischen den Objekten ersetzt werden.

Die einzelnen Objekte sind folgendermaßen miteinander verbunden:

Der Sendekanal SCH der ersten kombinierten Signalquelle/senke SR1 ist mit dem ersten Anschluss des ersten Schaltelements SW1 verbunden, der Empfangskanal RCH der ersten kombinierten Signalquelle/senke SR1 mit dem ersten Anschluss des zweiten Schaltelements SW2. Analog dazu ist der zweite Anschluss des ersten Schaltelements SW1 an den Empfangskanal RCH der zweiten kombinierten Signalquelle/senke SR2 angeschlossen, der zweite Anschluss des zweiten Schaltelements SW2 an den Sendekanal SCH der zweiten kombinierten Signalquelle/senke SR2.

Weiterhin besteht eine Verbindung zwischen dem dritten Anschluss des ersten Schaltelements SW1 und dem Empfangskanal RCH des Signalempfängers CR und eine Verbindung zwischen dem dritten Anschluss des zweiten Schaltelements SW2 und dem Sendekanal SCH des Tongenerators TOG.

Sowohl im ersten Schaltelement SW1 als auch im zweiten Schaltelement SW2 wird jeweils der erste Anschluss mit dem zweiten Anschluss verbunden, sodass zwischen der ersten kombinierten Signalquelle/senke SR1 und der zweiten kombinierten Signalquelle/senke SR2 eine bidirektionale Verbindung besteht.

Zusätzlich ist die erste kombinierte Signalquelle/senke SR1 mit dem ersten Konvertierungselement CONV1, die zweite kombinierte Signalquelle/senke SR2 mit dem zweiten Konvertierungselement CONV2 verbunden.

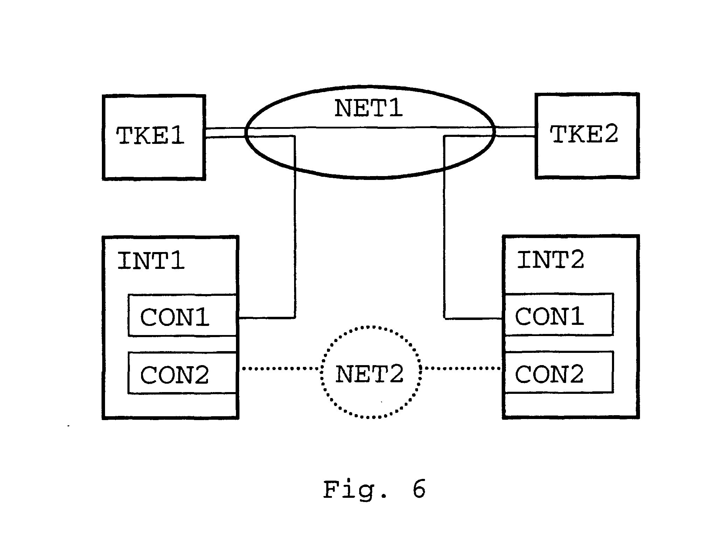

Figur 6 zeigt eine beispielhafte Anordnung zur Verbindung von zwei Telekommunikationsendgeräten über verschiedenartige Telekommunikationsnetze.

Die Anordnung umfasst ein erstes Telekommunikationsendgerät TKE1 und ein zweites Telekommunikationsendgerät TKE2, ein erstes Telekommunikationsnetz NET1 und ein zweites Telekommunikationsnetz NET2, sowie ein erstes und ein zweites Schnittstellenmodul INT1 und INT2. Das erste und zweite Schnittstellenmodul INT1 und INT2 sind gleichartig aufgebaut und umfassen jeweils einen ersten Anschluss CON1 und einen zweiten Anschluss CON2. Ein Schnittstellenmodul kann auch weitere Einheiten, insbesondere vermittlungstechnische Einheiten, umfassen, welche sowohl das erste Telekommunikationsnetz NET1 als auch das zweite Telekommunikationsnetz NET2 betreffen können.

Das erste Telekommunikationsnetz NET1 arbeitet im gezeigten Beispiel nach dem "Real Time Transport Protocol", kurz RTP-Protokoll. Denkbar ist aber auch ein anderer Standard, insbesondere ein Standard zur paketweisen Datenübermittlung.

Das zweite Telekommunikationsnetz NET2 arbeitet in der gezeigten Anordnung nach dem "Time Division Multiplex Verfahren", kurz TDM-Verfahren, wobei auch hier Alternativen denkbar sind. Das zweite Telekommunikationsnetz NET2 kann auch nur als virtuelles Netz existieren.

Die einzelnen Module sind folgendermaßen miteinander verbunden:

Das erste Telekommunikationsendgerät TKE1 ist über das erste Telekommunikationsnetz NET1 mit dem ersten Anschluss CON1 des ersten Schnittstellenmoduls INT1 verbunden. Analog dazu ist das zweite Telekommunikationsendgerät TKE2 ist über das erste Telekommunikationsnetz NET1 mit dem ersten Anschluss CON1 des zweiten Schnittstellenmoduls INT2 verbunden. Zusätzlich besteht zwischen dem zweiten Anschluss CON2 des ersten Schnittstellenmoduls INT1 und dem zweiten Anschluss CON2 des zweiten Schnittstellenmoduls INT2 eine Verbindung über das zweite Telekommunikationsnetz NET2. Das erste Telekommunikationsendgerät TKE1 ist mit dem zweiten Telekommunikationsendgeräte TKE2 über das erste Telekommunikationsnetz NET1 auch direkt verbunden.

In der Figur werden virtuelle Objekte mit einer gestrichelten Linie dargestellt, physikalisch existente mit einer durchgehenden Linie. Im Beispiel wird also das zweite Telekommunikationsnetz NET2 als virtuell angenommen.

Eine weitere Annahme für das Beispiel ist, dass auf der direkten Verbindung zwischen erstem und zweitem Telekommunikationsendgerät TKE1 und TKE2 Nutzdaten ausgetauscht werden, auf den übrigen Verbindungen Signalisierungsdaten. Diese Annahmen sind für das erfindungsgemäße Verfahren aber nicht zwingend erforderlich.

Die Funktion des in den Figuren 1 bis 6 dargestellten Beispiels ist wie folgt, wobei der Übersichtlichkeit halber Vereinfachungen gegenüber einer tatsächlichen, möglichen Realisierung vorgenommen werden:

Das erste Telekommunikationsendgerät TKE1 und das zweite Telekommunikationsendgerät TKE2 sind an das erste Telekommunikationsnetz NET1 angeschlossen, welches nach dem RTP-Standard arbeitet. Wesentlich für diese Netze ist, dass eine Verbindung innerhalb dieses Netzes ganzheitlich betrachtet und von den Endpunkten aus gesteuert wird. Im Gegensatz dazu steht das zweite Telekommunikationsnetz NET2, das auf dem TDM-Verfahren basiert. In diesen Netz besteht eine Verbindung in der Regel aus mehreren Teilstücken, die getrennt voneinander beeinflusst werden können. Diese Beeinflussung geht im allgemeinen nicht ausschließlich von den Endpunkten aus. Da zwischen erstem und zweiten Telekommunikationsendgerät TKE1 und TKE2 eine Verbindung des Signalisierungskanals über Telekommunikationsnetze geschaltet wird, welche nach verschiedenen Prinzipien arbeiten, ist das erste und das zweite Schnittstellenmodul INT1 und INT2 vorgesehen. Diese ermöglichen den Zusammenschluss verschiedenartiger Telekommunikationsnetze. Diese Funktion ist auch unter dem Begriff "Interworking" bekannt. Der Nutzkanal wird beispielsweise nach einem für Paketdatennetze bekannten Verfahren geschaltet.

Sowohl im ersten Schnittstellenmodul INT1, als auch im zweiten Schnittstellenmodul INT2 wird in diesem Beispiel je ein Verbindungsmodell erzeugt, welches über den ersten Anschluss CON1 und den zweiten Anschluss CON2 Signale aus den daran angeschlossenen Telekommunikationsnetzen empfangen und auch an diese abgeben kann. Ziel dieser Verbindungsmodelle ist, zwischen erstem und zweitem Telekommunikationsendgerät TKE1 und TKE2 eine virtuelle Verbindung herzustellen, welche sich so verhält, wie eine Verbindung in einem homogenen, nach dem RTP-Standard arbeitenden, Telekommunikationsnetz verhält. Zur Vereinfachung wird nur die Erzeugung des Verbindungsmodells im ersten Schnittstellenmodul INT1 beim Aufbau der Verbindung zwischen den beiden Telekommunikationsendgeräten betrachtet. Es wird darauf hingewiesen, dass das Verbindungsmodell in der Figur 6 nicht dargestellt wird.

Bei einer Anforderung zum Verbindungsaufbau zwischen erstem und zweitem Telekommunikationsendgerät TKE1 und TKE2 wird dies vom ersten Telekommunikationsnetz NET1 über den ersten Anschluss CON1 des ersten Schnittstellenmoduls INT1 an das erste Schnittstellenmodul INT1 signalisiert und von dort an das zweite Telekommunikationsnetz NET2 weitergereicht. Im ersten Schnittstellenmodul INT1 kann dazu eine Umwandlung der zu übermittelnden Informationen erfolgen. Im zweiten Telekommunikationsnetz NET2 werden der Netzlogik folgend Ressourcen belegt, die auch im Verbindungsmodell abgebildet werden. Im ersten Schnittstellenmodul INT1 wird daher ein Verbindungsmodell gemäß Figur 1 erzeugt wird. In Abweichung zur Figur 1 verbindet das erste Schaltelement SW1 im Initialzustand allerdings den Sendekanal SCH der ersten kombinierten Signalquelle/senke SR1 mit dem Signalempfänger CR, das zweite Schaltelement SW2 den Empfangskanal RCH der ersten kombinierten Signalquelle/senke SR1 mit dem Tongenerator TOG. Neben dem Aufbau des Verbindungsmodells in einem Schritt ist auch ein Aufbau in mehreren Schritten denkbar, bei dem nur jene Objekte erzeugt werden, die im augenblicklichen Zustand unbedingt notwendig sind.

Zusätzlich wird in das erste Adressfeld ADDR1 des ersten Konvertierungselements CONV1 die Adresse des ersten Telekommunikationsendgerätes TKE1 eingetragen. Neben der reinen Adressinformation können auch weitere Daten über das erste Telekommunikationsendgerät TKE1 eingetragen werden, beispielsweise Daten über Aufbau und Funktionsweise des ersten Telekommunikationsendgerätes TKE1.

Das erste Telekommunikationsendgerät TKE1 soll in unserem Beispiel für die Erzeugung eines Wähltons ausgerüstet sein. In einem klassischen TDM-Netz ist dies im allgemeinen nicht der Fall, da der Wählton in einer Vermittlungsstelle erzeugt und an das Telekommunikationsendgerät übermittelt wird. Um in einem nach dem RTP-Standard arbeitenden Telekommunikationsnetz nicht unnötig Ressourcen zu belegen, wird hier, anstelle des Wähltons an sich, nur Information über den Wählton an das Telekommunikationsendgerät übermittelt. Diese Information kann beispielsweise Tonhöhe, Wiederholrate und Einschaltverhältnis beinhalten. Selbstverständlich ist aber auch in einem RTP-Netz die Übertragung eines Wähltons als Datenstrom denkbar.

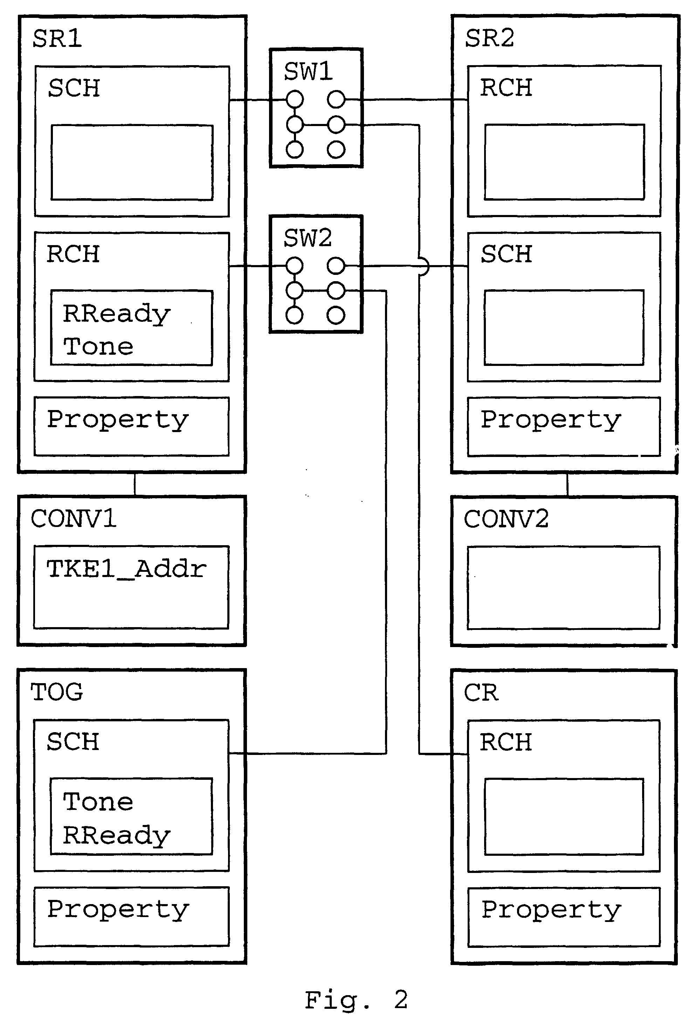

Die Toninformation Tone für die Erzeugung eines Wähltons wird nun in das Eingangsregister des Sendekanals SCH_IN des Tongenerators TOG eingetragen. Als nächster Schritt werden diese Daten in das Ausgangsregister des Empfangskanals RCH_OUT der ersten kombinierten Signalquelle/senke SR1 übertragen. Analog dazu wird der Wert Empfangsbereitschaft Rready in das Eingangsregister des Empfangskanals RCH_IN der ersten kombinierten Signalquelle/senke SR1 eingetragen und an den Tongenerator TOG übermittelt. Dort wird dieser Wert in das Ausgangsregister des Sendekanals SCH_OUT übertragen. Der aktuelle Zustand der Anordnung ist auch aus Figur 2 zu entnehmen.

In der Figur 2 ist zusätzlich angedeutet, dass in den zusätzlichen Datenbereich SR_DATA der ersten kombinierten Signalquelle/senke SR1, den zusätzlichen Datenbereich SR_DATA der zweiten kombinierten Signalquelle/senke SR2, den zusätzlichen Datenbereich CR_DATA des Signalempfängers CR und den zusätzlichen Datenbereich TOG_DATA des Tongenerators TOG Informationen über eine Eigenschaft des durch ein Objekt im Verbindungsmodell repräsentiertes physikalisches Objekt

Property eingetragen wird. Dies kann beispielsweise bei der Initialisierung erfolgen.

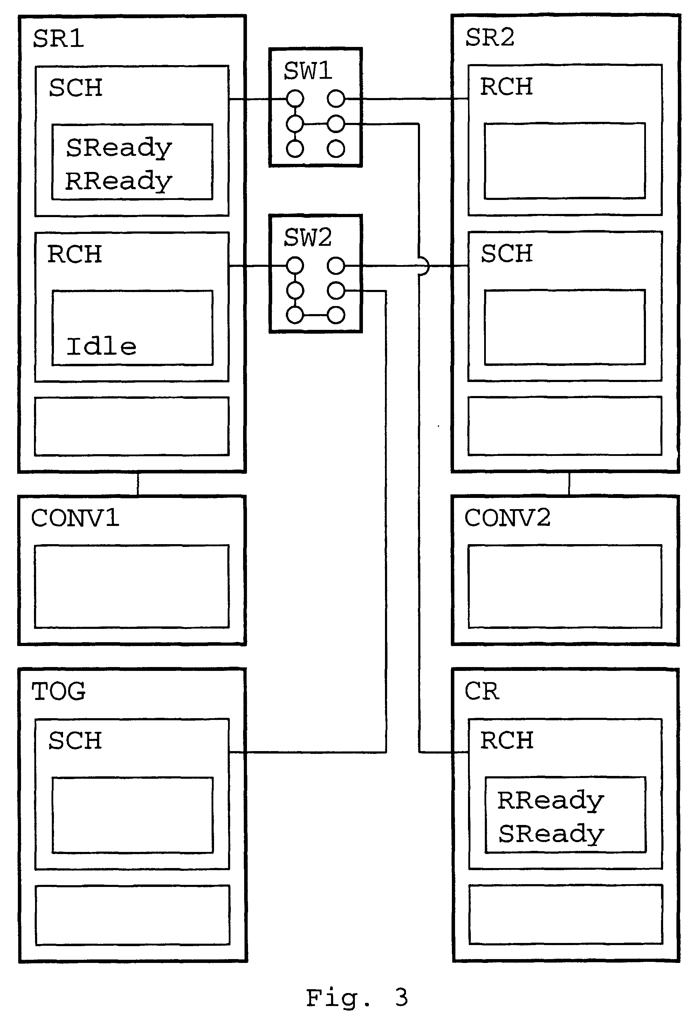

Weiterhin werden alle Datenfelder, die bei einem erfolgten Zustandswechsel nicht verändert wurden, in der Figur 2 leer dargestellt. Dies gilt auch für die Figuren 3, 4 und 5. Trotzdem können in den betreffenden Feldern natürlich Daten enthalten sein.

Das Anlegen des Wähltons im Verbindungsmodell ist nun abgeschlossen. Um das Verhalten des Verbindungsmodells auszuwerten, werden nach jedem Zyklus, in dem ein Eingangssignal in das Verbindungsmodell abgearbeitet wird, die Ausgangsregister der jeweiligen Objekte betrachtet. Wurde deren Wert gegenüber dem Beginn des Auswertezyklus verändert, so wird gegebenenfalls eine entsprechende Nachricht an die Einheit im Telekommunikationsnetz gesendet. Wurde der Wert nicht verändert, wird keine Nachricht gesendet.

In unserem Beispiel führt die Veränderung im Ausgangsregister des Empfangskanals RCH_OUT der ersten kombinierten Signalquelle/senke SR1 dazu, dass an das erste Telekommunikationsendgerät TKE1 im ersten Telekommunikationsnetz NET1 signalisiert wird, den Wählton, beispielsweise im Lautsprecher des Telefonhörers, zu erzeugen. Dies ist also eine Maßnahme, die aufgrund des Verhaltens des Verbindungsmodells aus einer anderen Maßnahme, nämlich der Signalisierung vom ersten Telekommunikationsnetz NET1 an das erste Schnittstellenmodul INT1 einen Wählton anzulegen, abgeleitet wurde. Um die entsprechende Nachricht an das erste Telekommunikationsendgerät TKE1 schicken zu können, wird dessen Adresse aus dem ersten Datenfeld ADDR 1 des ersten Konvertierungselements CONV1 ausgelesen. Der Veränderung im Ausgangsregister des Empfangskanals RCH_OUT des Tongenerator TOG ist dagegen kein Signal in das zweite Telekommunikationsnetz NET2 zugeordnet.

Vom Benutzer des ersten Telekommunikationsendgerätes TKE1 wird mit Hilfe eines Ziffernfeldes nun die Rufnummer des zweiten Telekommunikationsendgerätes TKE2 eingetippt. Diese wird über das erste Telekommunikationsnetz NET1 an das erste Schnittstellenmodul INT1 gesendet und in das Verbindungsmodell eingespeist. Dazu wird in das Eingangsregister des Sendekanals SCH_IN der ersten kombinierten Signalquelle/senke SR1 der Wert Sendebereitschaft Sready eingetragen und in das Ausgangsregister des Empfangskanals RCH_OUT des Signalempfängers CR übertragen. Analog dazu wird in das Eingangsregister des Empfangskanals RCH_IN des Signalempfängers CR der Wert Empfangsbereitschaft Rready eingetragen und in das Ausgangsregister des Sendekanals SCH_OUT der ersten kombinierten Signalquelle/senke SR1 übertragen.

Diesem Zustandswechsel wird das Umschalten des zweiten Schaltelements SW2 in den dritten Schaltzustand, bei dem kein Anschluss mit einem anderen verbunden ist, zugeordnet. Dies hat also zur Folge, dass der Tongenerator TOG nicht mehr mit der ersten kombinierten Signalquelle/senke SR1 verbunden ist. Daher wird in das Ausgangsregister des Empfangskanals RCH_OUT der ersten kombinierten Signalquelle/senke SR1 der Wert Ruhezustand Idle eingetragen. In unserem Beispiel führt die Veränderung im Ausgangsregister des Empfangskanals RCH_OUT der ersten kombinierten Signalquelle/senke SR1 dazu, dass an das erste Telekommunikationsendgerät TKE1 im ersten Telekommunikationsnetz NET1 signalisiert wird, das Freizeichen wieder abzuschalten. Der momentane Zustand des Verbindungsmodells wird in Figur 3 wiedergegeben.

Alle weiteren übermittelten Ziffern werden in Folge transparent durch das Verbindungsmodell durchgereicht und in das zweite Telekommunikationsnetz NET2 übermittelt. Denkbar ist auch, dass der momentane Zustand des Verbindungsmodells ausgewertet wird, um zu bestimmen, wie das Durchreichen und Übermitteln erfolgen soll, ohne dabei eine Zustandsänderung des Verbindungsmodells zu bewirken. Nach vollständiger Eingabe der Rufnummer wird die Verbindung zwischen erstem Telekommunikationsendgerät TKE1 und zweitem Telekommunikationsendgerät TKE2 geschaltet. Auch im Verbindungsmodell werden das erste und das zweite Schaltelement SW1 und SW2 so gesetzt, dass der Sendekanal SCH der ersten kombinierten Signalquelle/senke SR1 mit dem Empfangskanal RCH der zweiten kombinierten Signalquelle/senke SR2, der Empfangskanal RCH der ersten kombinierten Signalquelle/senke SR1 mit dem Sendekanal SCH der zweiten kombinierten Signalquelle/senke SR2 verbunden wird.

Zu diesem Zeitpunkt wird auch im zweiten Schnittstellenmodul INT2 ein zweites Verbindungsmodell laut Figur 1 erzeugt, wobei das erste Schaltelement SW1 in den dritten Schaltzustand gesetzt wird, das heißt kein anderes Objekt mit der ersten kombinierten Signalquelle/senke SR1 verbunden ist. Das zweite Schaltelement SW2 verbindet dagegen den Tongenerator TOG mit der ersten kombinierten Signalquelle/senke SR1.

Zwischen den beiden Verbindungsmodellen in den beiden Schnittstellenmodulen werden Nachrichten über das zweite Telekommunikationsnetz NET2 ausgetauscht, sodass beide Verbindungsmodelle jeweils den Zustand der Verbindung zwischen dem ersten und dem zweiten Telekommunikationsendgerät TKE1 und TKE2 widerspiegeln. Der Nachrichtenaustausch zwischen den einzelnen Bestandteilen eines in einem Telekommunikationsnetz verteilten Verbindungsmodells oder verschiedenen Instanzierungen eines Verbindungsmodells kann dabei beispielsweise nach einem sogenannten Tunnelverfahren erfolgen.

Vom zweiten Telekommunikationsnetz NET2 aus wird an das zweite Verbindungsmodell des zweiten Schnittstellenmoduls INT2 signalisiert, dass das Rufsignal an das zweite Telekommunikationsendgerät TKE2 angelegt werden soll. In Anlehnung an die schon beschriebenen Prinzipien wird das Verhalten des zweiten Verbindungsmodells ausgewertet. Als Folge davon wird über das erste Telekommunikationsnetz NET1 signalisiert, dass beim zweiten Telekommunikationsendgerät TEL2 das Rufsignal eingeschaltet werden soll. Weiterhin wird vom zweiten Verbindungsmodell des zweiten Schnittstellenmoduls INT2 über das zweite Telekommunikationsnetz NET2 an das erste Verbindungsmodell des ersten Schnittstellenmoduls INT1 eine entsprechende Nachricht übermittelt.

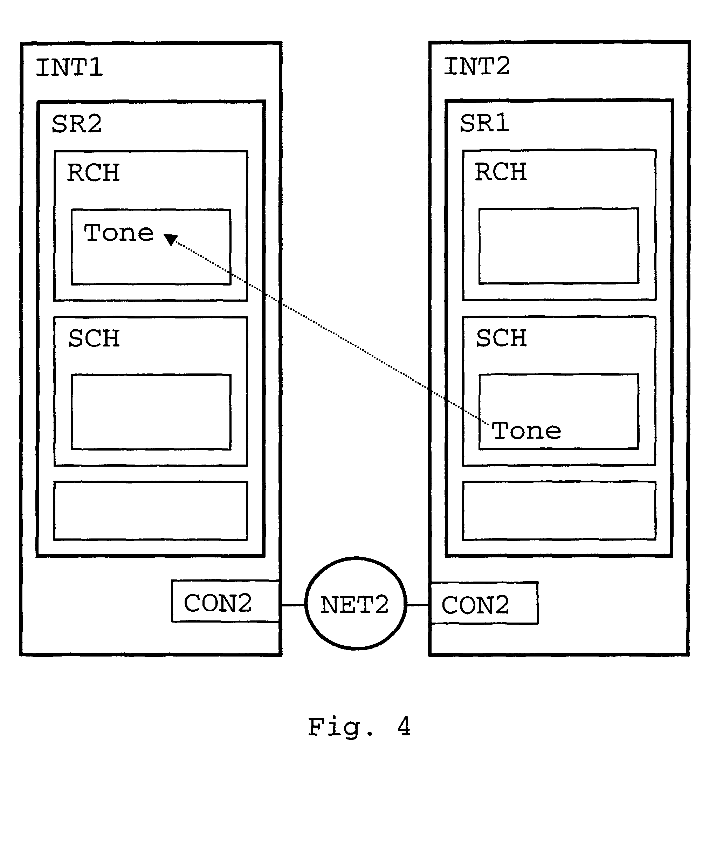

Dieser Vorgang ist in Figur 4 dargestellt, wobei die Verbindungsmodelle im ersten und im zweiten Schnittstellenmodul INT1 und INT2 auf das Notwendigste reduziert wurden. Das Übermitteln der Toninformation Tone vom Ausgangsregister des Empfangskanals SCH_OUT der ersten kombinierten Signalquelle/senke SR1 im zweiten Schnittstellenmodul INT2 zum Eingangsregister des Empfangskanals RCH_IN der zweien kombinierten Signalquelle/senke SR2 im ersten Schnittstellenmodul INT1 wird durch einen strichlierten Pfeil angedeutet.

Im ersten Verbindungsmodell des ersten Schnittstellenmoduls INT1 wird nun im Eingangsregister des Sendekanals SCH_IN der zweiten kombinierten Signalquelle/senke SR2 die Toninformation Tone für das Rufsignal eingetragen und in das Ausgangsregister des Empfangskanals RCH_IN der ersten kombinierten Signalquelle/senke SR1 übertragen. Dieser Zustandsänderung im Verbindungsmodell ist die Übertragung der Toninformation an das erste Telekommunikationsendgerät TKE1 über das erste Telekommunikationsnetz NET1 zugeordnet. In Folge wird das Rufsignal auch im ersten Telekommunikationsendgerät TKE1, beispielsweise mit Hilfe eines Lautsprechers in einem Telefonhörer, erzeugt.

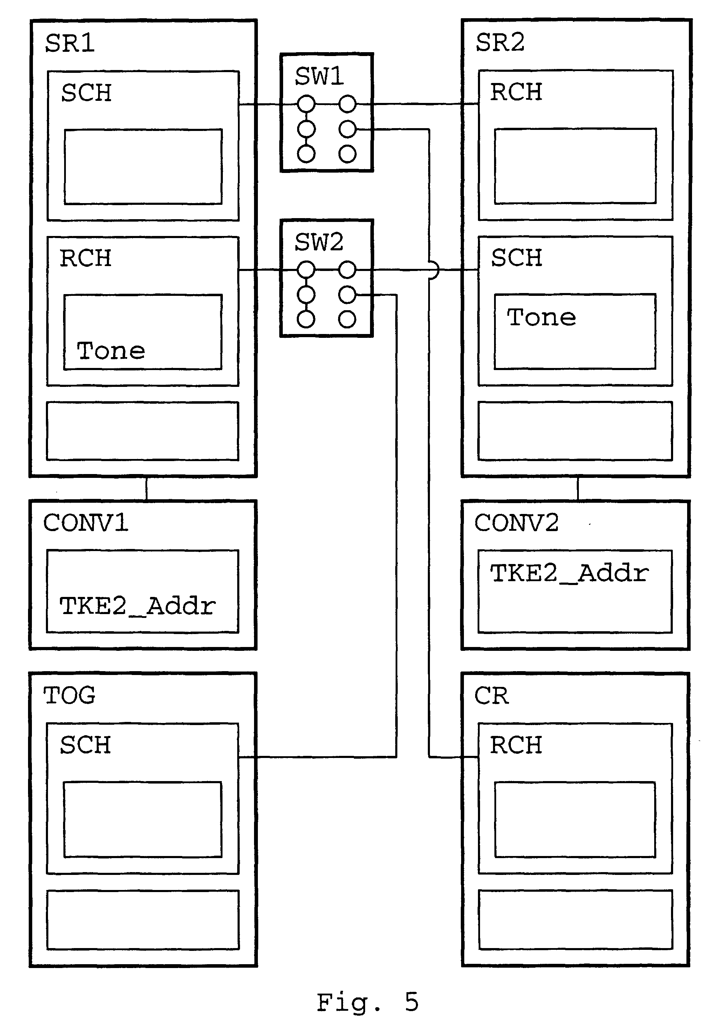

In entsprechender Weise wird auch das Abheben des Telefonhörers beim zweiten Telekommunikationsendgerät TKE2 verarbeitet, sodass mit Hilfe des ersten und des zweiten Schnittstellenmoduls INT1 und INT2, die Verbindung zwischen erstem und zweitem Telekommunikationsendgerät TKE1 und TKE2 durchgeschaltet wird. Dabei wird auch die Adresse des zweiten Telekommunikationsendgerätes TKE2 an das erste Verbindungsmodell im ersten Schnittstellenmodul INT1 übermittelt und dort in das erste Adressfeld ADDR1 des zweiten Konvertierungselements CONV2 und in das zweite Adressfeld ADDR2 des ersten Konvertierungselements CONV1 eingetragen. Der Zustand des Verbindungsmodells ist in Figur 5 dargestellt.

Die vorstehenden Betrachtungsweisen gelten natürlich für den Nutzkanal als auch den Signalisierungskanal gleichermaßen. Insbesondere kann, wie dargestellt, der Nutzkanal auch über einen anderen Weg als der Signalisierungskanal geführt werden.

Das erfindungsgemäße Verfahren hat beispielsweise auch den Vorteil, dass Ressourcen, welche im zweiten Telekommunikationsnetz NET2 vorhanden sind, genutzt werden können. Handelt es sich hierbei etwa um ein Telekommunikationsnetz, das nach einem TDM-Verfahren arbeitet, können gegebenenfalls ohnehin vorhanden und erprobte Dienste beziehungsweise Algorithmen, beispielsweise das Schalten von Konferenzen, Anklopfen, Anrufweiterleitung und ähnliches, verwendet werden, obwohl diese Dienste im ersten Telekommunikationsnetz NET1 nicht vorhanden sind. Komponenten des zweiten Telekommunikationsnetzes NET2, wie zum Beispiel Vermittlungsknoten, werden also in das erste Telekommunikationsnetz NET1 eingebettet. Innerhalb des zweiten Telekommunikationsnetzes NET2 ist diese Einbettung jedoch nicht oder nur in geringem Maße erkennbar. Im zweiten Telekommunikationsnetz NET2 sind dazu also keine oder nur geringfügige Änderungen notwendig. Technologisch unterschiedliche Telekommunikationsnetze können daher unter Zuhilfenahme des erfindungsgemäßen Verfahrens vorteilhaft zusammengeschaltet werden.

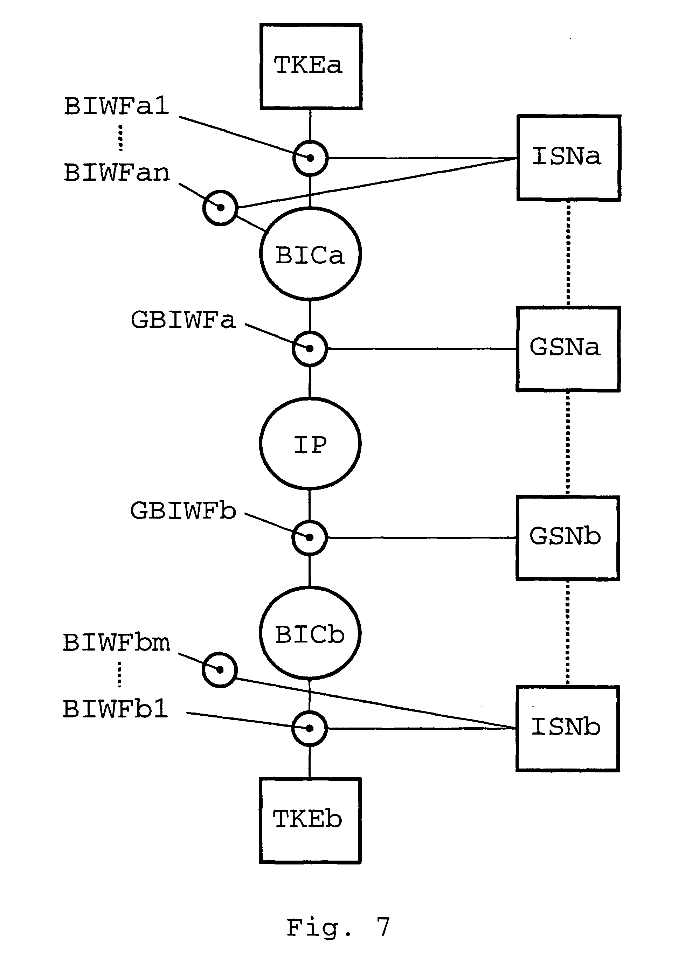

Figur 7 zeigt eine Netzwerkkonfiguration nach dem Stand der Technik, bei der eine Verbindung zwischen zwei Telekommunikationsendgeräten über mehrere technologisch unterschiedliche Telekommunikationsnetze hinweg hergestellt wird. Die in den Figuren enthaltenen Abkürzungen entsprechen den für ein "Bearer Independent Call Control"-Netz, kurz BICC-Netz, genormten Bezeichnungen wie sie im Standard ITU-T TRQ.2140 festgehalten sind und welcher im Internet zur Verfügung gestellt wird.

Die Figur 7 umfasst ein erstes und ein zweites Telekommunikationsendgerät TKEa und TKEb, ein erstes und ein zweites Telekommunikationsnetz BICa und BICb, welche nach dem BICC-Verfahren arbeiten und ein drittes Telekommunikationsnetz IP, welches beispielsweise nach dem Internet Protocol arbeitet. Weiterhin sind in der Figur eine erste und eine zweite Interface Serving Node ISNa und ISNb, sowie eine erste und eine zweite Gateway Serving Node GSNa und GSNb enthalten.

Darüber hinaus werde in der Figur erste Bearer Interworking Functions BIWFa1 bis BIWFan und zweite Bearer Interworking Functions BIWFb1 bis BIWFbm dargestellt, sowie eine erste und eine zweite Gateway Bearer Interworking Function G-BIWFa und G-BIWFb.

Die einzelnen Elemente sind wie folgt miteinander verbunden.

Das erste Telekommunikationsendgerät TKEa ist über die erste Bearer Interworking Functions BIWFa1 an das erste Telekommunikationsnetz BICa angeschlossen. Analog dazu ist das zweite Telekommunikationsendgerät TKEb über die zweite Bearer Interworking Functions BIWFb1 mit dem zweiten Telekommunikationsnetz BICb verbunden. Die übrigen ersten Bearer Interworking Functions BIWFa2 bis PIWFan sind ebenfalls mit dem ersten Telekommunikationsnetz BICa verbunden, aber nur symbolhaft dargestellt. Desgleichen sind die übrigen zweiten Bearer Interworking Functions BIWFb2 bis BIWFbm mit dem zweiten Telekommunikationsnetz BICb verbunden und ebenfalls nur symbolhaft dargestellt

Der Anschluss eines Telekommunikationsendgerätes TKE an ein Telekommunikationsnetz über eine Bearer Interworking Function BIWF ist nicht zwingend erforderlich. Denkbar ist natürlich auch der Fall, dass das Telekommunikationsendgerät TKE und das Telekommunikationsnetz technologisch gleichartig sind und direkt miteinander verbunden werden können. Eine Bearer Interworking Function BIWF ist in diesem Fall nicht unbedingt erforderlich.

Zwischen dem ersten und dem zweiten Telekommunikationsnetz BICa und BICb besteht darüber hinaus eine Verbindung über die erste Gateway Bearer Interworking Function G-BIWFa, das dritte Telekommunikationsnetz IP und die zweite Gateway Bearer Interworking Function G-BIWFb.

Von der ersten Interface Serving Node ISNa existieren n Verbindungen zu jeder ersten Bearer Interworking Function BIWFa1 bis BIWFan, von der zweiten Interface Serving Node ISNb m Verbindungen zu jeder zweiten Bearer Interworking Function BIWFb1 bis BIWFbm. Die erste Gateway Serving Node GSNa ist mit der ersten Gateway Bearer Interworking Function G-BIWFa, die zweite Gateway Serving Node GSNb mit der zweiten Gateway Bearer Interworking Function G-BIWFb verbunden.

Zusätzlich ist eine logische Verbindung von der ersten Interface Serving Node ISNa über die erste Gateway Serving Node GSNa und die zweite Gateway Serving Node GSNb zur zweiten Interface Serving Node ISNb mit einer strichlierten Linie angedeutet.

Die Funktion der in der Figur 7 gezeigten Anordnung ist wie folgt:

An den Netzwerkgrenzen wird mit Hilfe einer Bearer Interworking Function G-BIWF zumindest die Adresse eines Telekommunikationsendgerätes TKE von einem ersten Adressformat, welches in einem Telekommunikationsnetz verwendet wird, in ein zweites Adressformat umgewandelt, welches in einem anderen Telekommunikationsnetz verwendet wird. Die Funktion einer Bearer Interworking Function G-BIWF umfasst daher die Funktion einer dynamischen "Network Address Translation" (NAT) oder einer "Network Address Port Translation" (NAPT). Diese Vorgehensweise erfordert, dass verbindungsrelevante Daten im IP-Netz gespeichert werden müssen. Tritt in einer Bearer Interworking Function G-BIWF ein Fehler auf, so werden die darüberlaufenden Verbindungen abgebrochen. Daher ist der Einsatz von ausfallsicheren oder fehlertoleranten und daher technisch aufwendigen Komponenten nötig. Durch die Bearer Interworking Functions G-BIWF ergeben sich darüber hinaus Verzögerungen bei der Datenübermittlung, sowie gegebenenfalls Engstellen zwischen den einzelnen Telekommunikationsnetzen.

Beim erfindungsgemäßen Verfahren wird dagegen die Funktionalität einer Gateway Serving Node GSN, insbesondere der eine Gateway Bearer Interworking Function G-BIWF betreffende Anteil, in die Interface Serving Node ISN integriert. Sowohl die Gateway Bearer Interworking Functions G-BIWF, als auch gegebenenfalls die Gateway Serving Nodes GSN können daher weggelassen werden. Die Nutzinformation wird in diesem Fall vom ersten Telekommunikationsendgerät TKEa über die Eintritts Bearer Interworking Function oder erste Bearer Interworking Function BIWFa1 in das erste Telekommunikationsnetz BICa geführt, transparent in das zweite Telekommunikationsnetz BICb gereicht, und dort über die Austritts Bearer Interworking Function oder zweite Bearer Interworking Function BIWFb1 an das zweite Telekommunikationsendgerät TKEb übermittelt. Die erwähnten Nachteile bei der Konfiguration nach dem Stand der Technik werden so vorteilhaft vermieden.

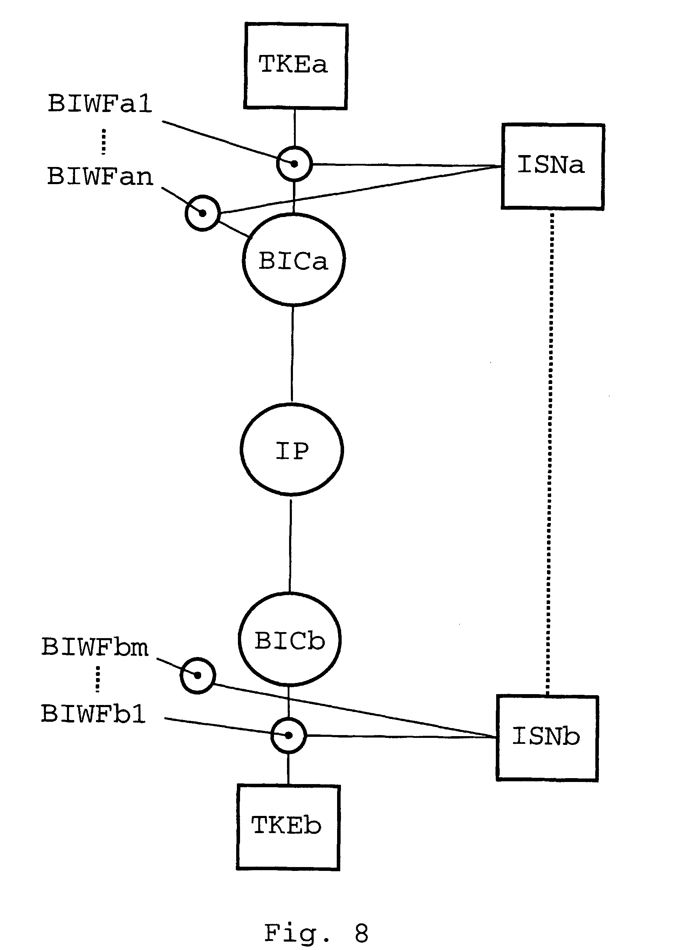

Eine beispielhafte erfindungsgemäße Netzwerkkonfiguration ist in Figur 8 dargestellt. Entsprechend der Erfindung wurden hier ausgehend von der in Figur 7 dargestellten Anordnung die erste und die zweite Gateway Serving Node GSNa und GSNb, sowie die erste und die zweite Gateway Bearer Interworking Function G-BIWFa und G-BIWFb gestrichen. Sowohl das erste Telekommunikationsnetz BICa und das dritte Telekommunikationsnetz IP, als auch das dritte Telekommunikationsnetz IP und das zweite Telekommunikationsnetz BICb sind nun direkt verbunden. Analog dazu besteht auch nun zwischen erster und zweiter Interface Serving Node ISNa und ISNb eine direkte logische Verbindung.

Die Funktionalität eines Schnittstellenmoduls INT kann nun von der Funktionalität einer Interface Serving Node ISN, in welche die Funktion einer der Gateway Serving Nodes GSN integriert wurde, umfasst sein, beziehungsweise beinhaltet das im Schnittstellenmodul INT laufende Verbindungsmodell sowohl Funktionalität der Gateway Serving Nodes GSN, als auch die der Interface Service Nodes ISN. Weiterhin können auch die Bearer Interworking Functions BIWF in das Verbindungsmodell integriert werden.

Im Ausführungsbeispiel wurde aus Gründen der verbesserten Anschaulichkeit lediglich Bezug auf Verbindungen zwischen zwei Telekommunikationsendgeräten TKE genommen. Von der Erfindung sind aber auch andere Arten von Verbindungen in einem Telekommunikationsnetz umfasst. Beispielsweise kann als Endpunkt einer Verbindung auch eine Bearer Interworking Function BIWF vorgesehen werden.

## Patentansprüche

1. Verfahren zur Steuerung einer Verbindung in einem Telekommunikationsnetz, insbesondere einer Verbindung zwischen zumindest einem ersten und einem zweiten Telekbmmunikationsendgerät,
**dadurch gekennzeichnet,**
- **dass** in einem programmierbaren Rechner ein Modell dieser Verbindung erzeugt wird,
- **dass** dieses Modell in einen dem Zustand dieser Verbindung zugeordneten Initialzustand gesetzt wird,
- **dass** beim Durchführen von ersten Maßnahmen, welche im Telekommunikationsnetz betreffend diese Verbindung gesetzt werden, zugeordnete Zustandswechsel im Modell ausgelöst werden,
- **dass** zweite Maßnahmen im Modell gesetzt werden und
- **dass** mit Hilfe des Verhaltens des Modells aufgrund einer zweiten Maßnahme entschieden wird, ob diese zweite, eine andere oder keine Maßnahme im Telekommunikationsnetz gesetzt wird.

2. Verfahren zur Steuerung einer Verbindung in einem ersten Telekommunikationsnetz, insbesondere einer Verbindung zwischen zumindest einem ersten und einem zweiten Telekommunikationsendgerät,
- wobei im ersten Telekommunikationsnetz (NET1) ein erster Satz von Maßnahmen zur Erlangung eines bestimmten Zustands der Verbindung, bezogen auf die beiden Endpunkte, gesetzt werden muss,
- dass in einem zweiten Telekommunikationsnetz (NET2) ein zweiter Satz von Maßnahmen zur Erlangung des selben Zustands der Verbindung, bezogen auf die beiden Endpunkte, gesetzt werden muss,
**dadurch gekennzeichnet**,
- dass in einem programmierbaren Rechner ein Modell dieser Verbindung des zweiten Telekommunikationsnetzes NET2 erzeugt wird,
- dass dieses Modell in einen dem Zustand dieser Verbindung zugeordneten Initialzustand gesetzt wird,
- dass beim Durchführen von ersten Maßnahmen, welche im ersten oder zweiten Telekommunikationsnetz (NET1 oder NET2) betreffend diese Verbindung gesetzt werden, zugeordnete Zustandswechsel im Modell ausgelöst werden,
- dass zweite Maßnahmen des ersten oder zweiten Telekommunikationsnetzes (NET1 oder NET2) im Modell gesetzt werden und
- dass mit Hilfe des Verhaltens des Modells aufgrund einer zweiten Maßnahme eine Maßnahme im ersten und/oder Telekommunikationsnetz (NET1 und/oder NET2) abgeleitet und gegebenenfalls gesetzt wird.

3. Verfahren nach einem der Ansprüche 1 bis 2,
**dadurch gekennzeichnet,**
- **dass** das Verbindungsmodell durch Objekte und deren Verbindungen gebildet wird,
- **dass** beim Durchführen von ersten Maßnahmen zugeordnete Objekte in einem programmierbaren Rechner erzeugt oder gelöscht werden und/oder
- **dass** beim Durchführen von ersten Maßnahmen mehrere zugeordnete Objekte verbunden oder voneinander getrennt werden und/oder
- **dass** beim Durchführen von ersten Maßnahmen zugeordnete, im Modell verwendete Parameter geändert werden.

4. Verfahren nach Anspruch 3,
**dadurch gekennzeichnet,**
- **dass** als Objekt ein Modell eines Sendekanals (SCH) vorgesehen wird und/oder
- **dass** als Objekt ein Modell eines Empfangskanals (RCH) vorgesehen wird und/oder
- **dass** als Objekt ein Modell eines Schaltelementes (SW) zum Verbinden und Trennen eines Empfangskanals (RCH) mit einem Sendekanal (SCH) und umgekehrt vorgesehen wird und/oder
- **dass** als Objekt ein Modell eines Signalgenerators (TOG) vorgesehen wird und ein Sendekanal (SCH) dieses Objekt mit einem Empfangskanal (RCH) eines anderen Objekts verbunden wird und/oder
- **dass** als Objekt ein Modell eines Signalempfängers (CR) vorgesehen wird und ein Empfangskanal (RCH) dieses Objekts mit dem Sendekanal (SCH) eines anderen Objekts verbunden wird und/oder
- **dass** als Objekt ein Modell einer kombinierten Signalquelle/senke (SR) vorgesehen wird und ein Sendekanal (SCH) dieser kombinierten Signalquelle/senke (SR) mit einem Empfangskanal (RCH) eines anderen Objekts und/oder ein Empfangskanal (RCH) dieser kombinierten Signalquelle/senke (SR) mit einem Sendekanal (SCH) eines anderen Objekts verbunden wird und/oder
- **dass** als Objekt ein Konvertierungselement (CONV) zum Umwandeln der Adresse (ADDR) eines Telekommunikationsendgerätes (TKE) von einem Adressformat in ein anderes Adressformat vorgesehen wird.

5. Verfahren nach einem der Ansprüche 1 bis 4,
**dadurch gekennzeichnet,**
- **dass** als Telekommunikationsnetz ein Bearer Independent Call Control Netz vorgesehen ist,
- **dass** eine Funktionalität einer Gateway Serving Node (GSN), insbesondere der eine Gateway Bearer Interworking Function (G-BIWF) betreffende Anteil, in das Modell integriert wird und/oder
- **dass** eine Funktionalität einer Interface Serving Node (ISN) in das Modell integriert wird und/oder
- **dass** eine Bearer Interworking Function (BIWF) in das Modell integriert wird und/oder
- **dass** eine Gateway Bearer Interworking Function (G-BIWF) in das Modell integriert wird.

6. Verfahren nach Anspruch 5, **dadurch gekennzeichnet, dass** die Funktionalität einer Gateway Serving Node (GSN), insbesondere der eine Gateway Bearer Interworking Function (G-BIWF) betreffende Anteil, in die Funktionalität einer Interface Service Node (ISN) integriert wird.

7. Verfahren nach Anspruch 5 bis 6, **dadurch gekennzeichnet, dass** eine Nutzkanalvermittlung über eine erste Bearer Interworking Function (BIWFa) und eine zweite Bearer Interworking Function (BIWFb) geführt wird.

8. Anordnung, welche zur Durchführung des Verfahrens nach einem der Ansprüche 1 bis 7 vorbereitet ist,
**dadurch gekennzeichnet,**
- **dass** die Anordnung einen programmierbaren Rechner umfasst, welcher zur Speicherung und Verwaltung eines Modells einer Verbindung in einem Telekommunikationsnetz geeignet ist,
- **dass** Mittel zur Auslösung von Zustandswechseln im Modell vorhanden sind, wobei die Zustandswechsel ersten Maßnahmen, welche im Telekommunikationsnetz gesetzt werden, zugeordnet sind,
- **dass** Mittel zum Setzen von zweiten Maßnahmen im Modell vorhanden sind,
- **dass** die Anordnung Mittel zur Auswertung des Verhaltens des Modells aufgrund einer zweiten Maßnahme und Mittel zur Entscheidung ob diese zweite, eine andere oder keine Maßnahme im Telekommunikationsnetz gesetzt wird, umfasst und
- **dass** die Anordnung Mittel zum Setzen einer Maßnahme im Telekommunikationsnetz, ausgehend vom Modell, vorhanden sind.

9. Anordnung nach Anspruch 8,
**dadurch gekennzeichnet,**
- **dass** zwischen einer ersten Interface Serving Node (ISNa) und einer zweiten Interface Serving Node (ISNb) eine durchgehende logische Verbindung besteht,
- **dass** die erste Interface Serving Node (ISNa) mit ersten Bearer Interworking Functions BIWFa1 bis BIWFan verbunden ist und/oder
- **dass** die zweite Interface Serving Node (ISNb) mit zweiten Bearer Interworking Functions (BIWFb1 bis BIWFam) verbunden ist.

## Claims

1. Method for controlling a link in a telecommunication network, particularly a link between at least a first and a second telecommunication terminal,
**characterized in that**
- a model of said link is generated in a programmable computer,
- said model is set in an initial state assigned to the state of said link,
- assigned state changes are initiated in the model, when implementing first measures, which are set in the telecommunication network with regard to this link,
- second measures are set in the model and
- the response of the model based on a second measure is used to decide whether this second, another or no measure is set in the telecommunication network.

2. Method for controlling a link in a telecommunication network, particularly a link between at least a first and a second telecommunication terminal,
- whereby in the first telecommunication network (NET1) a first set of measures has to be set to achieve a defined state of the link, in relation to the two end points
- in a second telecommunication network (NET2) a second set of measures has to be set to achieve the same state of the link, in relation to the two end points,
**characterized in that**
- a model of said link of the second telecommunication network NET2 is generated in a programmable computer,
- said model is set in an initial state assigned to the state of said link,
- assigned state changes are initiated in the model, when implementing first measures, which are set in the first or second telecommunication network (NET1 or NET2) with regard to this link,
- second measures of the first or second telecommunication network (NET1 or NET2) are set in the model and
- the response of the model based on a second measure is used to derive and in some cases set a measure in the first and/or [second] telecommunication network (NET1 or NET2).

3. Method according to one of Claims 1 to 2,
**characterized in that**
- the link model is formed by objects and their links,
- when implementing first measures, assigned objects are generated or deleted in a programmable computer and/or
- when implementing first measures, a plurality of assigned objects are connected together or separated from each other and/or
- when implementing first measures, assigned parameters used in the model are changed.

4. Method according to Claim 3,
**characterized in that**
- a model of a send channel (SCH) is provided as the object and/or
- a model of a receive channel (RCH) is provided as the object and/or
- a model of a switch element (SW) for connecting and separating a receive channel (RCH) in respect of a send channel (SCH) and vice versa is provided as the object and/or
- a model of a signal generator (TOG) is provided as the object and a send channel (SCH) of this object is connected to a receive channel (RCH) of another object and/or
- a model of a signal receiver (CR) is provided as the object and a receive channel (RCH) of this object is connected to the send channel (SCH) of another object and/or
- a model of a combined signal source/sink (SR) is provided as the object and a send channel (SCH) of this combined signal source/sink (SR) is connected to a receive channel (RCH) of another object and/or a receive channel (RCH) of this combined signal source/sink (SR) is connected to a send channel (SCH) of another object and/or
- a conversion element (CONV) for converting the address (ADDR) of a telecommunication terminal (TKE) from one address format to another address format is provided as the object.

5. Method according to one of Claims 1 to 4,
**characterized in that**
- a Bearer Independent Call Control network is provided as the telecommunication network,
- the functionality of a Gateway Serving Node (GSN), particularly the part relating to a Gateway Bearer Interworking Function (G-BIWF), is integrated in the model and/or
- the functionality of an Interface Serving Node (ISN) is integrated in the model and/or
- a Bearer Interworking Function (BIWF) is integrated in the model and/or
- a Gateway Bearer Interworking Function (G-BIWF) is integrated in the model.

6. Method according to Claim 5,
**characterized in that** the functionality of a Gateway Serving Node (GSN), particularly the part relating to a Gateway Bearer Interworking Function (G-BIWF), is integrated in the functionality of an Interface Service Node (ISN).

7. Method according to Claim 5 to 6,
**characterized in that** traffic channel switching is effected via a first Bearer Interworking Function (BIWFa) and a second Bearer Interworking Function (BIWFb).

8. Arrangement provided to implement the method according to one of Claims 1 to 7,
**characterized in that**
- the arrangement comprises a programmable computer, which is suitable for storing and managing a model of a link in a telecommunication network,
- means are available for initiating state changes in the model, whereby the state changes are assigned to first measures, which are set in the telecommunication network,
- means are available for setting second measures in the model,
- the arrangement comprises means for analyzing the response of the model based on a second measure and means for deciding whether this second, another or no measure is set in the telecommunication network and
- means are available for setting a measure in the telecommunication network, based on the model.

9. Arrangement according to Claim 8,
**characterized in that**
- an end-to-end logical link exists between a first Interface Serving Node (ISNa) and a second Interface Serving Node (ISNb),
- the first Interface Serving Node (ISNa) is connected to first Bearer Interworking Functions (BIWFa1 to BIWFan) and/or
- the second Interface Serving Node (ISNb) is connected to second Bearer Interworking Functions (BIWFb1 to BIWFam).

## Revendications

1. Procédé de commande d'une liaison dans un réseau de télécommunication, notamment d'une liaison entre au moins un premier terminal de communication et un deuxième terminal de communication,
**caractérisé par le fait que**
- dans un ordinateur programmable, on produit un modèle de cette liaison,
- on met ce modèle dans un état initial correspondant à l'état de cette liaison,
- lors de la mise en oeuvre de premières mesures qui sont prises dans le réseau de télécommunication concernant cette liaison, on déclenche un changement d'état associé dans le modèle,
- on prend des deuxièmes mesures dans le modèle, et
- à l'aide de la réaction du modèle suite à une deuxième mesure, on décide si on prend dans le réseau de télécommunication cette deuxième mesure, une autre mesure ou aucune mesure.

2. Procédé de commande d'une liaison dans un premier réseau de télécommunication, notamment d'une liaison entre au moins un premier terminal de communication et un deuxième terminal de communication,
- dans lequel, dans le premier réseau de télécommunication (NET1), on doit prendre un premier ensemble de mesures pour atteindre un certain état de la liaison, par rapport aux deux points extrêmes,
- dans lequel, dans un deuxième réseau de télécommunication (NET2), on doit prendre un deuxième ensemble de mesures pour atteindre le même état de la liaison, par rapport aux deux points extrêmes,
**caractérisé par le fait que**
- dans un ordinateur programmable, on produit un modèle de cette liaison du deuxième réseau de télécommunication (NET2),
- on met ce modèle dans un état initial correspondant à l'état de cette liaison,
- lors de la mise en oeuvre de premières mesures qui sont prises dans le premier ou le deuxième réseau de télécommunication (NET1 ou NET2) concernant cette liaison, on déclenche un changement d'état associé dans le modèle,
- on prend des deuxièmes mesures du premier ou deuxième réseau de télécommunication (NET1 ou NET2) dans le modèle, et
- à l'aide de la réaction du modèle suite à une deuxième mesure, on déduit et on prend le cas échéant une mesure dans le premier et/ou deuxième réseau de télécommunication (NET1 et/ou NET2).

3. Procédé selon l'une des revendications 1 à 2,
**caractérisé par le fait que**
- on forme le modèle de liaison avec des objets et leurs liaisons,
- lors de la mise en oeuvre de premières mesures, on produit ou on efface des objets associés dans un ordinateur programmable, et/ou
- lors de la mise en oeuvre de premières mesures, on relie ou on sépare plusieurs objets associés, et/ou
- lors de la mise en oeuvre de premières mesures, on modifie des paramètres utilisés dans le modèle.

4. Procédé selon la revendication 3,
**caractérisé par le fait que**
- on prévoit comme objet un modèle d'un canal d'émission (SCH), et/ou
- on prévoit comme objet un modèle d'un canal de réception (RCH), et/ou
- on prévoit comme objet un modèle d'un élément de commutation (SW) pour relier ou séparer un canal de réception (RCH) avec un canal d'émission (SCH) et inversement, et/ou
- on prévoit comme objet un modèle d'un générateur de signal (TOG) et on relie un canal d'émission (SCH) de cet objet à un canal de réception (RCH) d'un autre objet, et/ou
- on prévoit comme objet un modèle d'un récepteur de signal (CR) et on relie un canal de réception (RCH) de cet objet au canal d'émission (SCH) d'un autre objet, et/ou
- on prévoit comme objet un modèle d'une source / destination combinée de signal (SR) et on relie un canal d'émission (SCH) de cette source / destination combinée de signal (SR) à un canal de réception (RCH) d'un autre objet et/ou un canal de réception (RCH) de cette source / destination combinée de signal (SR) à un canal d'émission (SCH) d'un autre objet, et/ou
- on prévoit comme objet un élément de conversion (CONV) pour convertir l'adresse (ADDR) d'un terminal de communication (TKE) d'un format d'adresse à un autre format d'adresse.

5. Procédé selon l'une des revendications 1 à 4,
**caractérisé par le fait que**
- on prévoit comme réseau de télécommunication un réseau de contrôle d'appels indépendant du support appelé Bearer Independent Call Control Network,
- on intègre dans le modèle une fonctionnalité d'un noeud de contrôle de passerelle appelé Gateway Serving Node (GSN), notamment de la partie concernant une fonction d'interfonctionnement de support appelée Gateway Bearer Interworking Function (G-BIWF), et/ou
- on intègre dans le modèle une fonctionnalité d'un noeud de contrôle d'interface appelé Interface Serving Node (ISN), et/ou
- on intègre dans le modèle une fonction d'interfonctionnement de support appelée Bearer Interworking Function (BIWF), et/ou
- on intègre dans le modèle une fonction d'interfonctionnement de support de passerelle appelée Gateway Bearer Interworking Function (G-BIWF).

6. Procédé selon la revendication 5, **caractérisé par le fait qu'**on intègre dans la fonctionnalité d'un noeud Interface Serving Node (ISN) la fonctionnalité d'un noeud Gateway Serving Node (GSN), notamment de la partie concernant une fonction Gateway Bearer Interworking Function (G-BIWF).

7. Procédé selon la revendication 5 ou 6, **caractérisé par le fait qu'**on effectue une commutation de canal utile par l'intermédiaire d'une première fonction Bearer Interworking Function (BIWFa) et d'une deuxième fonction Bearer Interworking Function (BIWFb).

8. Dispositif, préparé pour la mise en oeuvre du procédé selon l'une des revendications 1 à 7,
**caractérisé par le fait que**
- le dispositif comprend un ordinateur programmable qui convient à la mémorisation et à la gestion d'un modèle d'une liaison dans un réseau de télécommunication,
- il existe dans le modèle des moyens destinés à déclencher des changements d'état, les changements d'état étant associés à des premières mesures qui sont prises dans le réseau de télécommunication,
- il existe dans le modèle des moyens destinés à prendre des deuxièmes mesures,
- le dispositif comprend des moyens destinés à évaluer la réaction du modèle suite à une deuxième mesure et des moyens destinés à décider si cette deuxième mesure, une autre mesure ou aucune mesure est prise dans le réseau de télécommunication, et
- le dispositif comprend des moyens destinés, à partir du modèle, à prendre une mesure dans le réseau de télécommunication.

9. Dispositif selon la revendication 8,
**caractérisé par le fait que**
- une liaison logique continue existe entre un premier noeud Interface Serving Node (ISNa) et un deuxième noeud Interface Serving Node (ISNb),
- le premier noeud Interface Serving Node (ISNa) est relié à des premières fonctions Bearer Interworking Functions (BIWFa1 à BIWFan), et/ou
- le deuxième noeud Interface Serving Node (ISNb) est relié à des deuxièmes fonctions Bearer Interworking Functions (BIWFb1 à BIWFam).
